## Europäisches Patentamt

(19) **European Patent Office**

**Office européen des brevets**

(11) Veröffentlichungsnummer: **0 092 216**
**B1**

---

(12) **EUROPÄISCHE PATENTSCHRIFT**

---

(45) Veröffentlichungstag der Patentschrift:
**05.02.86**

(21) Anmeldenummer: **83103733.8**

(22) Anmeldetag: **18.04.83**

(51) Int. Cl.⁴: **H 04 B 17/02, H 03 M 13/00**

---

(54) **Coderegelverletzungsprüfer für digitale Signale im AMI-Code.**

---

(30) Priorität: **20.04.82 DE 3214622**

(43) Veröffentlichungstag der Anmeldung:
**26.10.83 Patentblatt 83/43**

(45) Bekanntmachung des Hinweises auf die Patenterteilung:
**05.02.86 Patentblatt 86/6**

(84) Benannte Vertragsstaaten:
**AT BE CH DE FR GB IT LI LU NL SE**

(56) Entgegenhaltungen:
**EP - A - 0 044 554**
**EP - A - 0 044 555**
**EP - A - 0 047 683**
**US - A - 3 048 819**

**PATENTS ABSTRACTS OF JAPAN, Band 2, Nr. 51, 12. April 1978, Seite 954 E 78**
**CONFERENCE RECORD, 1978 NATIONAL TELECOMMUNICATIONS CONFERENCE, Band 2, 3.-6. Dezember 1978, Birmingham, Alabama, IEEE Katalog Nr. 78CH1354-0 CSCB Seiten 30.5.1-30.5.7, IEEE, New York, USA T.E. CLARK et al.: "A low power miniature repeater for T1 tranmission"**
**NEC RESEARCH AND DEVELOPMENT, Nr. 21, April 1971, Seiten 63-70, Tokyo, JP. T. MATSUSHIMA et al.: "A consideration on a simplified PCM repeatered line"**

(73) Patentinhaber: **Siemens Aktiengesellschaft, Berlin und München Wittelsbacherplatz 2, D-8000 München 2 (DE)**

(72) Erfinder: **Meyer, Fritz, Dr.-Ing., Wifostrasse 5, D-8034 Germering (DE)**

---

## Beschreibung

Die Erfindung betrifft einen Coderegelverletzungsprüfer für digitale Signale im AMI-Code.

Aus der US-A-3 048 819 ist bereits ein Coderegelverletzungsprüfer für im AMI-Code vorliegende digitale Signale bekannt. Die Kombination eines Coderegelverletzungsprüfers und eines Regenerators für im AMI-Code vorliegende digitale Signale ist aus der EP-A-0 044 555 bekannt. Die Kombination eines Coderegelverletzungsprüfers nach der vorliegenden Anmeldung mit einem Regenerator für AMI-codierte digitale Signale ist in der auf einer zeitgleichen Parallelammeldung basierenden EP-A-0 092 215 beschrieben.

Beim AMI-Code handelt es sich um einen pseudoternären Code, bei dem der eine Logikpegel dem Nullpegel und der andere Logikpegel dem $+1$- bzw. $-1$-Pegel entspricht, wobei auf einen positiven Impuls immer ein negativer und umgekehrt folgen muß.

Bei der Übertragung digitaler Signale besteht die Notwendigkeit, an Schnittstellen zwischen verschiedenen Teilen der Übertragungssysteme oder auch zwischen verschiedenen Übertragungssystemen, wie beispielsweise zwischen Kabelstrecken und zwischen Richtfunkstrecken, die digitalen Signale auf ihre Fehlerhäufigkeit hin zu überwachen. Neben der Überwachung der laufenden digitalen Summe wird bei geeigneter Codierung häufig die Einhaltung der verwendeten Coderegel überprüft. Damit ist in einer Vielzahl von Fällen eine sichere Fehlererkennung gewährleistet. Ein Coderegelverletzungsprüfer zur Überwachung der digitalen Signale stellt also ein Zusatzgerät dar, das in eine Vielzahl von Übertragungseinrichtungen bei Schrittgeschwindigkeiten bis zu einigen 100 MBaud zusätzlich eingebaut wird und deshalb neben einem geringen Aufwand auch einen einfachen Aufbau haben muß. Eine weitere wesentliche Forderung an einen derartigen Coderegelverletzungsprüfer ist die Möglichkeit, die Funktion besonders kritischer Teile durch einen einfachen Test überwachen zu können, ohne daß dabei die Übertragung der digitalen Signale beeinträchtigt wird.

Bei der vorliegenden Erfindung ergibt sich also die Aufgabe, einen Coderegelverletzungsprüfer der eingangs erwähnten Art für digitale Signale mit Schrittgeschwindigkeiten bis zu einigen 100 MBaud zu schaffen, der neben eifachem Aufbau und geringem Aufwand leicht zu integrieren ist und auch eine Testmöglichkeit enthält.

Erfindungsgemäß wird die Aufgabe dadurch gelöst, daß ein Eingang für die digitalen Signale vorgesehen ist, an den in Reihe ein Schmitt-Trigger, ein Versögerungsglied und ein zweiter Eingang eines Fehlerdetektors angeschlossen sind, daß der Fehlerdetektor einen, durch ein gegenüber dem Eingangssignal um eine Schrittperiode verzögertes Schmitt-Triggerausgangssignal gesteuerten Umschalter und zwei von diesem aktivierte Schwellenwertvergleicher enthält, von denen der eine einen Vergleich des Eingangssignals mit der unteren Schwellenspannung und der andere mit der oberen Schwellenspannung des Schmitt-Triggers durchführt, daß mit dem Eingang des Coderegelverletzungsprüfers ein erster Eingang des Fehlerdetektors direkt verbunden ist und daß bei Coderegelverletzungen am Ausgang des Fehlerdetektors, der dem Ausgang des Coderegelverletzungsprüfers entspricht, jeweils ein Fehlerimpuls entnehmbar ist. Eine wegen ihres stromsparenden Aufbaus bevorzugte Weiterbildung der Erfingdung ergibt sich dadurch, daß der Fehlerdetektor einen ersten und einen zweiten Transistor enthält, deren Emitteranschlüsse miteinander und mit einer Stromquelle verbunden sind, daß der Basisanschluß des ersten Transistors den zweiten Eingang des Fehlerdetektors bildes, daß der Basisanschluß des zweiten Transistors mit einer Referenzspannungsquelle und der Kollektoranschluß dieses zweiten Transistors mit den zusammengeführten Emitteranschlüssen eines dritten und eines vierten Transistor verbunden sind, daß der Kollektoranschluß des ersten Transistors mit den zusammengeführten Emitteranschlüssen eines fünften und eines sechsten Transistors verbunden ist, daß die zusammengeführten Basisanchlüsse des dritten un des fünften Transistors den ersten Eingang des Fehlerdetektors bilden, daß die Kollektoranschlüsse des vierten und des fünften Transistors miteinander, mit einem Ausgangsanschluß und über einen ersten Widerstand mit Bezugspotential verbunden sind, daß die Kollektoranschlüsse des dritten und des sechsten Transistors miteinander, mit einem weiteren Ausgangsänschluß und über einen zweiten Widerstand mit Bezugspotential verbunden sind, daß der Basisanschluß des vierten Transistors mit einer Quelle für eine Spannung entsprechend der negativen Schaltschwelle des SchmittTriggers und der Basisanschluß des sechsten Transistors mit einer Quelle für eine Spannung entsprechend der positiven Schaltschwelle des Schmitt-Triggers verbunden sind.

Weitere bevorzugte Ausbildungen des Coderegelprüfers nach der Erfindung sind in den Patentansprüchen 3 bis 6 näner beschrieben.

Die Erfindung soll im folgenden anhand der Zeichnung näher erläutert werden. In der Zeichnung zeigt

Fig. 1 das Blockschaltbild des erfindungsgemäßen Coderegelverletzungsprüfers,

Fig. 2 ein Impulsdiagramm zur Fig. 1 und

Fig. 3 ein detailliertes Schaltbild des im Coderegelverletzungsprüfer nach Fig. 1 enthaltenen Fehlerdetektors.

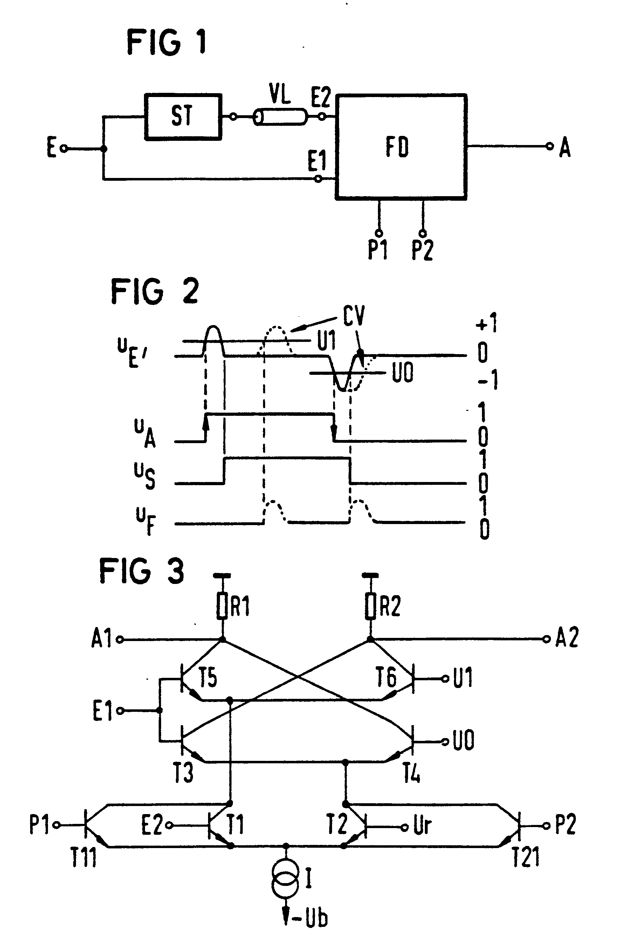

In der Fig. 1 ist mit E der Eingang des Coderegelverletzungsprüfers für die digitalen Signale bezeichnet, an den der erste Eingang eines Fehlerdetektors FD und der Eingang eines Schmitt-Triggers ST angeschlossen sind. Der Ausgang des Schmitt-Triggers ist über ein Verzögerungsglied VL mit dem zweiten Eingang des Fehlerdetektors FD verbunden. Der Fehlerdetektor enthält zwei weitere Eingänge F1, F2, an die Prüfimpulse zum Testen des Fehlerdetektors angelegt werden können. Der Ausgang A des Fehlerdetektors stellt gleichzeitig den Ausgang des Coderegelverletzungsprüfers dar, bei festgestellten Coderegelverletzungen wird jeweils ein Impuls am Ausgang A erzeugt.

Der Coderegelverletzug sprüfer nach der Fig. 1 ist zur Verarbeitung von AMI-codierten digitalen Signalen vorgesehen.

Zur Erläuterung der Funktion des Coderegelverletzungsprüfers nach der Fig. 1 dient das Impulsdiagramm nach

**0 092 216**

der Fig. 2, das in der obersten, mit $u_E$ bezeichneten Zeile das am Eingang E des Coderegelverletzungsprüfers anstehende Eingangssignal zeigt. In der darunter befindlichen Zeile, die mit $u_A$ bezeichnet ist, ist das Ausgangssignal des Schmitt-Triggers ST dargestellt. Entsprechend der Funktion des Schmitt-Triggers wechselt dessen Ausgangssignal vom logischen C- auf den logischen 1-Pegel, sofern das Eingangssignal $u_F$ den oberen Schwellenwert U1 des Schmitt-Triggers überschreitet. Entsprechend wechselt das Ausgangssignal des Schmitt-Triggers von 1 auf 0, wenn ein negativer Impuls des Eingangssignals $u_E$, die untere, im negativen Spannungsbereich liegende Schaltschwelle UO des Schmitt-Triggers unterschreitet. Der Abstand der Schwellenwerte U1 - U0 entspricht dabei der Hysterese des Schmitt-Triggers. Der Schmitt-Trigger wirkt dabei also als pseudoternärer Amplitudenentscheider, der im Differenz-Binärcode vorliegende Ausgangssignale erzeugt.

Die Eingangs- und Ausgangssignale des Schmitt-Triggers werden dem Fehlerdetektor FD zugeführt Der Fehlerdetektor besteht im Prinzip aus drei geeignet zusammengeschalteten emittergekoppelten Differenzverstärkern, von denen der erste Differenzverstärker als gesteuerter Umschalter für die beiden anderen Differenzverstärker dient, die als Schwellenwertvergleicher geschaltet sind. Der Umschalter wird von dem Ausgangssignal des SchmittTriggers gesteuert, das gegenüber dem Eingangssignal um eine Schrittperiode verzögert ist. Der eine Schwellenwertvergleicher erhält eine Referenzspannung entsprechend der unteren Schwellenspannung UO des SchmittTriggers, während am anderen Schwellenwertvergleicher eine Referenzspannung entsprechend der oberen Schwellenspannung U1 des Schmitt-Triggers anliegt. Die Ausgangsspannung $u_A$ des Schmitt-Triggers wird über ein Verzögerungsglied VL in Form eines Logikgatters, also mehrerer in Kette geschalteter Inverterstufen, so verzögert, daß die Summe der Laufzeiten von Schmitt-Trigger und Verzögerungsglied einer Schrittperiode der digitalen Signale entspricht. Das verzögerte Signal liegt dabei am zweiten Eingang E2 des Fehlerdetektors an und wird im weiteren auch als Steuersignal $u_S$ bezeichnet; es ist in der dritten Zeile der Fig. 2 dargestellt. Dort ist erkennbar, däß durch einen ersten positiven Impuls im Eingangssignal $u_E$ der SchmittTrägger in den Zustand $u_A = 1$ schaltet. Unter der Voraussetzumg, daß die Impulsdauer der Schrittperiode bzw. der Bitdauer entspricht, wird unmittelbar nach dem Abklingen des positiven Eingangsimpulses auch das Steuersignal $u_S = 1$. Dadurch wird der Coderegelverletzungsprüfer für das Auffinden weiterer positiver Impulse im Eingangssignal $u_F$, die der Coderegel nicht entsprechen würden, aktiviert. Ein weiterer mit CV bezeichneter positiver Impuls führt damit zum Auftreten eines Fehlersignals $u_F$ am Ausgang A2 des Coderegelverletzungsprüfers. Der Prüfzustand für positive Impulse dauert bis zum Ende des ersten negativen Eingangsimpulses an, durch den der Schmitt-Trigger auf das Ausgangssignal $u_A = 0$ umgeschaltet wird. Damit ist es also auch möglich, mehrere aufeinanderfolgende Fehlerimpulse unabhängig voneinander zu erkennen und beispielsweise zahlenmäßig festzustellen. Eine Schrittperiode nach dem Auftreten des ersten negativen Eingangsimpulses wird das Steuersignal $u_S = 0$, damit wird der Coderegelverletzungsprüfer so gesteuert, daß er bei nachfolgenden weiteren negativen Eingangsimpulsen jeweils ein Fehlersignal $u_F = 1$ abgibt. Im vorliegenden Falle wurde eine Verbreiterung des negativen Eingangsimpulses als Coderegelverletzung CV erkannt und ein entsprechender Fehlerimpuls erzeugt, ohne daß die Eingangsimpulse zwischendurch auf 0 abgeklungen sein müssen.

An den Ausgang A ist im vorliegenden Falle eine Einrichtung zur Übertragung von Telemetriedaten angeschlossen, durch die die Fehlerimpulse zu einer zentralen Überwachungsstelle übermistelt werden.

Fehlerimpulse können nicht nur das Ergebnis von Coderegelverletzungen im digitalen Signal sein, es kann auch eine ungenaue Funktion, beispielsweise im Fehlerdetektor, vorliegen, dessen Referenz- bzw. Schwellenspannungen beispielsweise durch Temperatureinflüsse sich verändern. Zur Abgrenzung von Fehlern, die im Übertragungsweg für die digitalen Signale entstanden sind, von den Fehlern, die im Fehlerdetektor selbst enstehen, ist eine gelegentliche Überprüfung des Fehlerdetektors FD notwendig. Zu diesem Zweck verfügt der Fehlerdetektor FD über Eingänge P1, P2, an die Prüfimpulse angelegt werden können. Die Prüfimpulse können dabei örtlich erzeugt werden, sie können aber auch über die für die Weiterleitung der Fehlerimpulse eingerichtete Übertragungsstrecke von einer auswertenden Zentrale mittels einer Telemetrieeinrichtung an die einzelnen Coderegelverletzungsprüfer gesendet werden.

Für die Einkopplung von Frütimpulsen bestehen mehrere Möglichkeiten; die eine Möglichkeit besteht darin, Prüfimpulse so in den Fehlerdetektor einzukoppeln, daß das Signal am Eingang El ständig unter dem unteren Schwellenwert UO des Schmitt-Triggers bleibt. In diesem Fall wird für die Dauer, während der das Steuersignal $u_S = 0$ ist, also zwischen dem Auftreten eines negativen Eingangsimpulses und eines positiven Eingangsimpulses,ein Fehlerimpuls ausgelöst.

Entsprechend können die Prüfimpulse so eingekoppelt werden, daß das Signal am Eingang E1 während der Inpulssignaldauer ständig über dem oberen Schwellenwert U1 bleibt. Nun wird für die Dauer, während der das Steuersignal $u_S = 1$ ist, also nach dem Auftreten eines positiven Eingangsimpulses bis zum Auftreten des nächsten negativen Eingangsimpulses, ein Fehlerimpuls ausgelöst.

Eine weitere Möglichkeit der Einkopplung von Prüfimpulsen besteht darin, das Steuersignal $u_S = 0$ zu setzen. Dann erzeugt jeder negative Eingangsimpuls einen Fehlerimpuls. Ebenso kann das Steuersignal $u_S = 1$ gesetzt werden, so daß dann jeder positive Eingangssignalimpuls bei korrekter Funktion des Fehlerdetaktors einen Fehlerimpuls erzeugt.

In der Fig. 3 ist die detaillierte Schaltung des Fehlerdetektors FD nach der Fig. 1 dargestellt. Der Fehlerdetektor besteht im Prinzip aus drei geeignet zusammengeschalteten emittergekoppelten Differenzverstärkern. Der erste Differenzverstärker wird durch die beiden Transistoren T1 und T2 gebildet, der zweite Differenzverstärker durch die Transistoren T3 und T4 und der dritte Differenzverstärker durch die Transistoren T5 und T6.

3

Die Emitteranschlüsse des ersten und des zweiten Transistors T1 und T2 sind miteinander und über eine Stromquelle I mit einer negativen Betriebsspannung -Ub verbunden. Der Basisanschluß des ersten Transistors T1 stellt den zweiten Eingang E2 des Fehlerdetektors dar, während der Basisanschluß des Transistors T2 mit einer Referenzspannungsquelle Ur verbunden ist. Die Basisanschlüsse des dritten und des fünften Transistors T3, T5 sind miteinander und mit einem Anschluß verbunden, der den Eingang E1 des Fehlerdetektors entsprechend Fig. 1 darstellt. Der Basisanschluß des vierten Transistors T4 ist mit einer Quelle verbunden, die eine Spannung entsprechend der unteren Umschaltschwelle UO des Schmitt-Triggers ST angibt, während der Basisanschluß des sechsten Transistors T6 mit einer Quelle verbunden ist, die eine Spannung entsprechend-der oberen Umschaltschwelle D1 des Schmitt-Triggers ST abgibt. Der Kollektoranschluß des ersten Transistors T1 ist mit den zusammengeführten Emitteranschlüssen des fünften und sechsten Transistors T5 und T6 verbunden, während der Kollektoranschluß des zweiten Transistors T2 mit den zusammengeführten Emitteranschlüssen des dritten und des vierten Transistors T3, T4 verbunden ist. Die Kollektoranschlüsse des vierten und des fünften Transistors T4, T5 sind miteinander, mit einem ersten Ausgangsanschluß A1 und über einen ersten Widerstand R1 mit Bezugspotential verbunden. Die Kollektoranschlüsse des dritten und des sechsten Transistors T3, T6 sind ebenfalls miteinander, mit einem zweiten Ausgangsanschluß A2 sowie über einen zweiten Widerstand R2 mit Bezugspotential verbunden. Die Ausgangsanschlüsse A1 und A2 führen jeweils zueinander die inversen Impulse und können deshalb wahlweise als Ausgangsanschluß A2 entsprechend Fig. 1 dienen.

Zur Erhöhung der Umschaltgeschwindigkeit kann anstelle der Referenzspannung Ur dem Basisanschluß des zweiten Transistors T2 auch die zum Steuersignal $u_S$ inverse Spannung $\bar{u}_S$ zugeführt werden. Stammt das Steuersignal $u_S$ beispielsweise von dem einen Ausgang eines Flipflops mit komplementären Ausgängen, dann kann vom anderen Ausgang dieses Flipflops das inverse Steuersignal ohne weiteren Aufwand entnommen und anstelle der Referenzspannumg Ur zur Steuerung des Fehlerdetektors mit verwendet werden.

Der Fehlerdetektor nach der Fig. 3 stellt im Hinblick auf den Eingang E und den Ausgang A eine Logikschaltung dar, deren Ausgang die beiden Zustände 0 und 1 annehmen kann umd bei der der Zustand 1 dem höheren Potential entspricht. Durch den aus dem ersten und dem zweiten Transistor T1 und T2 gebildeten Differenzverstärker wird durch Vergleich zwischen dem Steuersignal $u_S$ und der Referenzspannung Ur der logische Pegel des Steuersignals festgestellt. Bei einer Steuerspannung $u_S = 0$ leitet der Transistor T2 und speist den aus dem dritten und dem vierten Transistor gebildeten Differenzverstärker mit dem Strom I. Damit ist als Beferenzspannung für das Eingangssignal am Eingang E1 der untere Schwellenwert UO wirksam. Unterschreitet in diesem Falle die Eingangsspannung diesen Schwellenwert U0, dann sperrt der dritte Transistor T3 und es entsteht am Ausgang A2 ein Fehlersignal $u_F = 1$ bzw. am Ausgang Al ein entsprechend inverses Fehlersignal. Ist das Steuersignal $u_S = 1$, dann leitet der erste Transistor T1. In diesem Fall fließt der Strom I über den Kollektor des ersten Transistors Tl zu dem aus dem fünften und sechsten Transistor gebildeten Differenzverstärker, so daß damit als Referenzspannung für das Eingangssignal die obere Schaltschwelle U1 des Schmitt-Triggers ST wirksam ist. Ein Fehlersignal am Ausgangsanschluß A2 wird dann erzeugt, wenn die Eingangsspannung die Spannung Ul überschreitet, da in diesem Falle der Transistor T6 gesperrt wird .

Zusätzlich ist dem Transistor T1 emitter- und kollektorseitig der Transistor T11 und dem Transistor R2 der Transistor T21 parallelgeschaltet. Diese beiden Transistoren T11 und T21 dienen der Zuführung von Prüfimpulsen, da deren Basisanschlüsse P1 und P2 den Anschlüssen für Prüfimpulse in der Fig. 1 entsprechen.

Wird die angelegte Spannung am Anschluß P 1 positiver als das Steuersignal $u_S = 1$, dann fließt der Strom I ständig durch den aus den Transistoren T5 und T6 gebildeten Differenzverstärker. In diesem Falle erzeugen alle positiven Eingangsimpulse am Entscheidereingang entsprechende Fehlerimpulse am Ausgang A2, so lange der positive Zustand des Signals an P1 andauert. Entsprechend bewirkt ein positives Signal am Anschluß P2, daß dann der Strom I durch den aus den Transistoren T3 und T4 gebildeten Differenzverstärker fließt. Dann erzeugen alle negativen Eingangsimpulse am Ausgang A2 Fehlerimpulse $u_F = 1$.

Die Dauer der erzeugten Fehlerimpulse entspricht etwa der Dauer der Impulse des digitalen Übertragungssignals. Bei Übertragungssystemen mit sehr hohen Üoertragungsgeschwindigkeiten ergeben sich dadurch sehr kurze Fehlerimpulse, deren Übertragung zu einer überwachenden Zentrale und deren Auswertung vergleichsweise aufwendig ist. Bei digitalen Signalen mit sehr hohen Bitraten ist es deshalb vorteilhaft, die erzeugten Fehlerimpulse vor der Übertragung beispieisweise durch ein Monoflop zu verbreitern, bei Verzicht auf eine genaue Feststellung der Anzahl der Fehlerimpulse kann dabei die Impulsverbreiterung über mehrere Schrittperioden gehen.

**Patentansprüche**

1. Coderegelverletzungsprüfer für digitale Signale im AMI-Code, <u>dadurch gekennzeichnet</u>, daß ein Eingang (E) für die digitalen Signale vorgesehen ist, an den in Reihe ein Schmitt-Trigger (ST), ein Verzögerungsglied (VL) und ein zweiter Eingang (E2) eines Fehlerdetektors (FD) angeschlossen sind, daß der Fehlerdetektor einen, durch ein gegenüber dem Eingangssignal um eine Schrittperiode verzögertes SchmittTriggerausgangssignal gesteuerten Umschalter (T1, T2) und zwei von diesem aktivierte Schwellenwertvergleicher (T3, T4; T5, T6) enthält, von denen der eine einen Vergleich des Eingangssignals mit der unteren Schwellenspannung (UO) und der andere mit der oberen Schwellenspannung (U1) des Schmitt-Triggers (ST) durchführt, daß mit dem Eingang (E) des Coderegelverletzungsprüfers ein erster Eingang (E1) des Fehlerdetektors (FD) direkt verbunden ist und daß bei

4

Coderegelverletzungen an Ausgang (A) des Fehlerdetektors, der dem Ausgang des Coderegelverletzungsprüfers entspricht, jeweils ein Fehlerimpuls entnehmbar ist.

2. Coderegelverletzungsprüfer nach Anspruch 1,<u>da- durch gekennzeichnet</u>, daß der Fehlerdetektor (FD) einen ersten und einen zweiten Transistor (T1, T2) enthält, deren Emitteranschlüsse miteinander und mit einer Stromquelle (I) verbunden sind, daß der Basisanschluß des ersten Transistors (T1) den zweiten Eingang (E2) des Fehlerdetektors (FD) bildet, daß der Basisanschluß des zweiten Transistors (T2) mit einer Referenzspannungsquelle (Ur) und der Kollektoranschluß dieses zweiten Transistors (T2) mit den zusammengeführten Emitteranschlüssen eines dritten und eines vierten Transistors (T3, T4) verbunden sind, daß der Kollektoranschluß des ersten Transistors (T1) mit den zusammengeführten Emitteranschlüssen eines fünften und eines sechsten Transistors (T5, T6) verbunden ist, daß die zusammen Basisanschlüsse des dritten und des fünften Transistors (T3, T5) den ersten Eingang (E1) des Fehlerdetektors bilden, daß die Kollektoranschlüsse des vierten und des fünften Transistors (T4, T5) miteinander, mit einem Ausgangsanschluß (A1) und über einen ersten Widerstand (R1) mit Bezugspotential verbunden sind, daß die Kollektoranschlüsse des dritten und des sechsten Transistors (T3, T6) miteinander, mit einem weiteren Ausgangsanschluß (A2) und über einen zweiten Widerstand (R2) mit Bezugspotential verbunden sind, daß der Basisanschluß des vierten Transistors (T4) mit einer Quelle für eine Spannung (UO) entsprechend der negativen Schaltschwelle des Schmitt-Triggers (ST) und der Basisanschluß des sechsten Transistors (T6) mit einer Quelle für eine Spannung (U1) entsprechend der positiven Schaltschwelle des Schmitt-Triggers (ST) verbund

3. Coderegelverletzungsprüfer nach Patentanspruch 2, <u>dadurch abgewandelt</u>, daß der Basisanschluß des zweiten Transistors (T2) mit einer Quelle verbunden ist, die ein zu dem am zweiten Eingang (E2) anliegenden Steuersignal ($u_S$) inverses Steuersignal ($u_S$) abgibt.

4. Coderegelverletzungsprüfer nach Patentansprüchen 2 oder 3, <u>dadurch gekennzeichnet</u>, daß zur Zuführung von Prüfimpulsen dem ersten Transistor (T1) emitter- und kollektorseitig ein weiterer Transistor (T11) und auch den zweiten Transistor (T2) emitter- und kollektorseitig ein weiterer Transistor (T21) parallelgeschaltet sind, daß einem der beiden Basisanschlüsse (Pa, P2) dieser Transistoren (T11, T21) eine die obere Umschaltschwelle (U1) des Schmitt-Triggers (ST) überschreitende Spannung oder eine die untere Schaltschwelle (UO) des Schmitt-Triggers (ST) unterschreitende Spannung zugeführt wird.

5. Coderegelverletzungsprüfer nach Patentanspruch 1, <u>dadurch gekennzeichnet</u>, daß als Verzögerungsglied (VL) ein Logikgatter vorgesehen ist.

6. Coderegelverletzungsprüfer nach Patentanspruch 1, <u>dadurch gekennzeichnet</u>, daß mit dem Ausgang (A) des Fehlerdetektors (FD) ein Monoflop verbunden ist.

**Patent claims**

1. A code violation monitor for digital signals in the AMI-code, characterised in that an input (E) is provided for the digital signals, which is connected in series with a Schmitt trigger (ST), a delay element (VL) and a second input (E2) of an error detector (FD), that the error detector includes a changeover switch (T1,T2) which is controlled by a Schmitt trigger output signal which is delayed by one element period relative to the input signal, and further includes two threshold value comparators (T3,T4:T5,T6) which are activated by said changeover switch (T1,T2) and of which the first compares the input signal with the lower threshold voltage (UO) and the other compares the input signal with the upper threshold voltage (U1) of the Schmitt trigger (ST), that the input (E) of the code violation monitor is directly connected to a first input (E1) of the error detector (FD), and that in the event of code rule infringements an error pulse can be obtained from that output (A) of the error detector which corresponds to the output of the code violation monitor.

2. A code violation monitor as claimed in claim 1, characterised in that the error detector (FD) includes a first and a second transistor (T1,T2) whose emitter terminals are connected to one another and to a current source (1), that the base terminal of the first transistor (T1) forms the second input (E2) of the error detector (FD), that the base terminal of the second transistor (T2) is connected to a reference voltage source (Ur) and the collector terminal of the second transistor (T2) is connected to the combined emitter terminals of a third and a fourth transistor (T3,T4), that the collector terminal of the first transistor (T1) is connected to the combined emitter terminals of a fifth and sixth transistor (T5,T6), that the combined base terminals of the third and fifth transistors (T3,T5) form the first input (E1) of the error detector, that the collector terminals of the fourth and fifth transistors (T4,T5) are connected to one another, to an output terminal (A1) and to reference potential via a first resistor (R1), that the collector terminals of the third and sixth transistors (T3,T6) are connected to one another, to a further output (A2), and to reference potential via a second resistor (R2), that the base terminal of the fourth transistor (T4) is connected to a source for a voltage (UO) corresponding to the negative switching threshold of the Schmitt trigger (ST), and the base terminal of the sixth transistor (T6) is connected to a source for a voltage (U1) corresponding to the positive switching threshold of the Schmitt trigger (ST).

3. A code violation monitor as claimed in patent claim 2, modified in that the base terminal of the second transistor (T2) is connected to a source which emits a control signal ($u_S$) which is inverse to the control signal ($u_S$) occurring at the second input (E2).

4. A code violation monitor as claimed in patent claims 2 or 3, characterised in that for the supply of test pulses, on its emitter and collector side the first transistor (T1) is connected in parallel with a further transistor (T11), and likewise the second transistor (T2) is connected in parallel on its emitter and collector sides to a further transistor (T21), that one of the two base terminals (P1,P2) of the transistors (T11,T21) is supplied with a voltage which exceeds the upper switchingover threshold (UI) of the Schmitt trigger (ST), or with a voltage which falls below the lower switching threshold (UO) of the Schmitt trigger (ST).

5. A code violation monitor as claimed in patent claim I, characterised in that a logic gate is provided by way of delay element (VL).

6. A code violation monitor as claimed in patent claim 1, characterised in that a monoflop is connected to the output (A) of the error detector (FD).

## Revendications

1. Dispositif de contrôle de violations de la regle du code pour des signaux numeriques selon le code AMI, caractérisé par le fait qu'il est prévu une entrée (T) pour les signaux numeriques, à laquelle se trouvent raccordés en série un déclencheur de Schmitt (ST), un circuit de retardement (VL) et une seconde entrée (E2) d'un détecteur d'erreurs (FD), que le détecteur d'erreurs contient un commutateur (T1, T2) commandé par un signal de sortie du déclencheur de Schimitt retarde d'un cycle de pas des signaux par rapport au signal d'entrée, et deux comparateurs à valeur de seuil (T3, T4 ; T5, T6) activés par ce commutateur et dont l'un réalise une comparaison du signal d'entrée et de la tension inférieure de seuil (UO) et dont l'autre réalise une comparaison du signal d'entree et de la tension supérieure de seuil (U1) du déclencheur de Schmitt (ST), ou'une première entree (EI) du détecteur d'erreurs (FD) est reliée directement à l'entrée (E) du dispositif de contrôle de violations de la règle du code et que, dans le cas de violations de la règle du code, respectivement une impulsion d'erreurs peut être prélevée sur la sortie (A) du détecteur d'erreurs,qui correspond à la sortie (A) du dispositif de contrôle de violations de la règle du code.

2. Dispositif de contrôle de violations de la règle du code suivant la revendication 1, caractérisé par le fait que le détecteur d'erreurs (FD) contient un premier et un second transistors (T1, T2), dont les bornes d'émetteur sont reliées entre elles et à une source de courant (I), que la borne de base du premier transistor (T1) constitue la seconde entrée (E2) du détecteur d'erreurs (FD), que la borne de base du second transistor (T2) est reliée à une tension de reference (Ur) et que la borne de collecteur du second transistor (T2) est reliée aux bornes d'émetteur interconnectées d'un troisième et d'un quatrième transistors (T3, T4), que la borne de collecteur du premier transistor (TI) est reliée aux bornes d'émetteurs interconnectées d'un cinquième et d'un sixième transistors (T5, T6), que les bornes de bases interconnectées du troisième et du cinquième transistors (T3, T5) forment la première entrée (E1) du détecteur d'erreurs,que les bornes de collecteur du quatrième et du cinouième transistors (T4, T5) sont reliées entre elles, à une borne de sortie (A) et, par l'intermédiaire d'une première résistance (R1), au potentiel de reference, que les bornes de collecteur du troisième et du sixième transistors (T3, T6) sont reliees entre elles, à une autre borne de sortie (A2) et, par l'intermédiaire d'une seconde résistance (R2), au potentiel de référence, que la borne de base du quatrième transistor (T4) est reliée à une source délivrant une tension (U0) conformément au seuil de commutation négatif du déclencheur de Schmitt (ST) et que la borne de base du sixième transistor (T6) est reliée à une source délivrant une tension (U1) conformément au seuil de commutation positive du déclencheur de Schmitt (ST).

3. Dispositif de contrôle de violations de la règle du code suivant la revendication 2, caractérisé par le fait que la borne de base du second transistor (T2) est reliée à une source qui délivre un signal de commande ($u_S$) inverse du signal de commande ($u_S$) appliqué à la seconde entrée (E2).

4. Dispositif de contrôle de violations de la règle du code suivant les revendications 2 ou 3, caractérisé par le fait que pour l'envoi d'impulsions de contrôle, un autre transistor (TII) est branché en paralléle sur le premier transistor (TI), entre l'èmetteur et le collecteur, et également un autre transistor (T21) est branché en parallèle sur le second transistor (T2), entre l'émetteur et le collecteur, et qu'une tension dépassant le seuil supérieur de commutation (UI) du déclencheur de Schmitt (ST) ou une tension tombant au-dessous du seuil inférieur de commutation (UO) du déclencheur de Schmitt (ST) est envoyée à l'une des deux bornes de base (Pa, P2) de ces transistors (T11, T21).

5. Dispositif de contrôle de violations de la règle du code suivant la revendication 1, caractérisé par le fait qu'une porte logique est prévue comme circuit de retardement (VL).

6. Dispositif de contrôle de violations de la règle du code suivant la revendication 1, caractérisé par le fait qu'une bascule monostable est reliée à la sortie (A) du détecteur d'erreurs (FD).

# FIG 1

# FIG 2

# FIG 3